# DEMANDE DE BREVET EUROPEEN

(11) **EP 0 631 423 A2**
(43) Date de publication de la demande: **28.12.1994**
(21) Numéro de dépôt: 94400126.2
(22) Date de dépôt: 21.01.1994
(51) Int. Cl.: H04M 11/08

(54) **Procédé et appareil de traitement de signaux vidéotex**

(30) Priorité: 21.01.1993 FR 9300606
(71) Demandeur: Robert, Bruno, 75003 Paris (FR)
(72) Inventeur: Robert, Bruno, 75003 Paris (FR)
(74) Mandataire: Dupuis-Latour, Dominique

(57) **Abrégé**

Ce procédé consiste à exécuter, au sein d'un dispositif connecté en local à un appareil vidéotex, les étapes consistant à :
- dans une étape préalable, charger dans une première mémoire du dispositif une pluralité de pages affichables prédéfinies hiérarchisées entre elles selon une arborescence prédéterminée, chacune de ces pages comportant, d'une part, un bloc d'identification contenant une donnée représentative de la place de la page respective dans l'arborescence et, d'autre part, l'ensemble des informations à reproduire sur l'organe d'affichage, en distinguant entre pages d'arborescence pure, qui n'appellent de l'utili- sateur que des ordres de recherche de page, et pages de saisie, qui appellent en outre de l'utilisateur l'introduction de données à mémoriser,
- opérer une interprétation d'arborescence des ordres de recherche de page, en recherchant dans la première mémoire une page dont le bloc d'identification répond à un critère prédéterminé fonction dudit ordre et du bloc d'identification de la page courante affichée,
- opérer une interprétation syntaxique des données à saisir, en vérifiant pour chaque champ de saisie la conformité des données ainsi reçues au type correspondant d'information à saisir, ce type étant déterminé par une série de caractères prédéterminés des champs de saisie, et
- créer, en cas de conformité, un enregistrement et le charger dans une seconde mémoire du dispositif.

## Description

L'invention concerne le traitement des signaux vidéotex, c'est-à-dire de signaux de vidéographie interactive échangés avec un appareil vidéotex tel qu'un terminal de type "Minitel".

Bien que l'invention soit décrite ci-dessous principalement dans le cadre de signaux échangés avec un terminal Minitel, l'invention est applicable à d'autres types d'appareils vidéotex, qu'ils soient spécifiques ou préexistants, et l'on donnera dans la description d'autres exemples de mise en oeuvre permettant de généraliser l'invention.

Un tel appareil vidéotex comprend essentiellement un organe d'introduction de commandes et de données, un organe d'affichage de pages vidéotex, un organe d'échange de données en local, éventuellement un organe de réception de données en provenance d'un site distant et/ou d'émission de données vers un site distant, ainsi qu'un organe d'aiguillage gérant le fonctionnement coordonné des organes précités.

Dans le cas d'un terminal Minitel, ces organes correspondent, respectivement, au clavier, à l'écran, à la prise péri-informatique, à la prise téléphonique et son modem associé, et aux circuits de gestion d'aiguillage.

Ces terminaux Minitel ne comportent généralement pas de mémoire permettant d'enregistrer et de restituer les pages affichées sur l'écran. À cet effet, on connaît des dispositifs, connectés sur la prise péri-informatique, qui stockent dans une mémoire toutes les données correspondant à une page affichée à l'écran, suite à la frappe d'une touche spécifique du terminal. Ces pages peuvent être visualisées ultérieurement par l'utilisateur, et éventuellement effacées ou recopiées sur une imprimante placée en parallèle sur la prise.

Mais, dans tous les cas de figures, l'utilisateur ne dispose d'aucun ordre permettant une autre action que la visualisation, l'effacement ou l'impression, le dispositif connecté sur la prise péri-informatique étant dépourvu de toute "intelligence".

L'article de I. Sebestyén "The Use of the Magazine Method in Interactive Videotex through Intelligent Videotex Decoders", *Infor- mations Services & Uses,* vol. 5, n° 6, 1985, pp. 291-303, propose de télécharger en bloc des pages vidéotex organisées en une arborescence pour pouvoir les consulter ensuite en temps différé en parcourant à loisir l'arborescence après déconnexion du terminal. Toutefois, il ne s'agit là que d'une simple consultation de pages, sans autre fonctionnalité offerte à l'utilisateur.

L'un des buts de l'invention est de pallier ces limitations, en proposant un procédé de traitement de signaux vidéotex qui puisse être mis en oeuvre notamment au sein d'un dispositif distinct, connecté au terminal vidéotex, pour permettre à celui-ci d'exécuter en local, sous la commande de l'utilisateur, un certain nombre de fonctions allant au-delà de la simple consultation de pages mémorisées.

Ce procédé va notamment, dans un premier aspect, chercher à utiliser les touches alphanumériques du clavier (c'est-à-dire les touches autres que les touches de fonction "SUITE", "RETOUR", "SOMMAIRE", "ENVOI", etc. dont sont pourvus les terminaux vidéotex) pour saisir des données et les enregistrer après validation dans une mémoire particulière du dispositif. L'ensemble du traitement (saisie, validation et mémorisation) pourra être effectué entièrement en local, c'est-à-dire entre l'appareil vidéotex et un dispositif connecté sur la prise péri-informatique, les données enregistrées étant conservées dans ce dernier dispositif en vue d'une utilisation ultérieure, par exemple après télécollecte.

Comme on le voit, le procédé de l'invention, qui peut notamment être mis en oeuvre à l'intérieur d'un dispositif simplement connecté au terminal (par exemple sous la forme d'un boîtier enfichable de petite taille inséré dans la prise péri-informatique du Minitel) permet à l'appareil vidéotex de fonctionner de façon totalement autonome sans qu'il soit nécessaire de le relier en permanence à un serveur distant.

L'utilisateur ne verra toutefois aucune différence avec une utilisation classique (c'est-à-dire au cours d'une session d'échange de données avec un serveur distant par l'intermédiaire d'une liaison téléphonique), car le procédé de l'invention permet d'émuler toutes les fonctions habituellement rencontrées, telles que par exemple le déplacement dans une arborescence complexe à plusieurs niveaux et plusieurs profondeurs et la saisie interactive de données avec contrôle immédiat de la conformité intrinsèque des données introduites au clavier (format de date, contraintes de zones numériques ou alphabétiques, etc.).

Plus précisément, le procédé de l'invention, qui est du type générique tel qu'exposé dans l'article précité de Sebestyén et repris dans le préambule de la revendication 1, est caractérisé de la manière spécifiée dans la partie caractérisante de la revendication 1.

L'invention vise également, en tant que tels, l'appareil vidéotex précité (revendication 6), le dispositif précité (revendication 7) et un système de personnalisation d'un tel dispositif (revendication 8).

D'autres caractéristiques et avantages apparaîtront à la lecture de la description détaillée ci-dessous d'un exemple de mise en oeuvre de l'invention, faite en référence aux dessins annexés.
La figure 1 montre, schématiquement, un ensemble comprenant un appareil vidéotex et un dispositif connecté, permettant de mettre en oeuvre le procédé de l'invention.
La figure 2 est une variante de mise en oeuvre, où le procédé de l'invention est appliqué au traitement de signaux de vidéographie diffusée (télétexte).
La figure 3 est un exemple d'arborescence selon laquelle peuvent être organisées les pages vidéotex traitées par le procédé de l'invention.
Les figures 4a à 4d montrent la structure des blocs d'en-tête des diverses pages d'une arborescence, selon la nature de ces pages.
La figure 5 est un schéma illustrant l'articulation des deux étapes successives d'interprétation mises en oeuvre par l'invention.
La figure 6 montre l'architecture générale selon laquelle sont organisés les modules exécutant les différentes étapes du procédé de l'invention, selon les ordres ou les données envoyés par l'utilisateur.

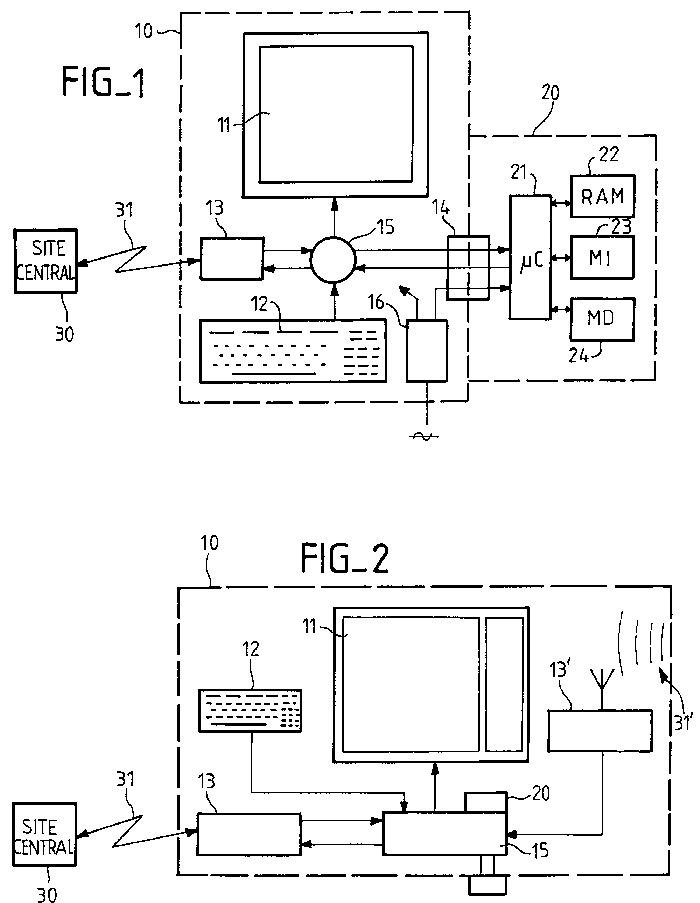

Sur la figure 1, la référence 10 désigne, de façon générale, un ensemble d'éléments que l'on appellera "appareil vidéotex" ou "terminal", cet ensemble regroupant, dans l'exemple illustré, les différents éléments d'un terminal Minitel de type classique.

Ce terminal 10 comporte un organe d'affichage de pages vidéotex ou écran 11, un organe d'introduction de commandes et de données ou clavier 12, un organe de réception de données en provenance d'un site distant et/ou d'émission de données vers ce site distant tel qu'un modem 13 (la référence 30 désignant le serveur du site distant et la référence 31 la liaison téléphonique), un organe d'échange de données en local tel qu'une prise péri-informatique 14, un organe d'aiguillage 16 gérant le fonctionnement coordonné des différents organes 11 à 14, ainsi qu'un bloc d'alimentation 16 délivrant les tensions de fonctionnement nécessaires.

On ne décrira pas plus en détail cet appareil vidéotex, qui est d'un type classique et est utilisé tel quel, sans modification de ses circuits internes. On notera seulement que l'organe d'introduction de données n'est pas nécessairement un clavier ; il peut s'agir, en variante ou en complément, d'un autre organe d'acquisition de données tel qu'un lecteur de codes à barres, un lecteur de cartes à mémoire ou de carte magnétique, etc.

Ou encore, il peut s'agir d'un simple clavier téléphonique, les touches " * " et " # " étant utilisées comme touches de fonction, à l'égal des touches "CORRECTION" et "ENVOI" d'un clavier de Minitel.

Une autre possibilité consiste à "déporter" le clavier et l'écran par l'intermédiaire d'une liaison téléphonique. Par exemple, on peut prévoir deux terminaux Minitel connectés interactivement : le premier de ces terminaux reçoit le "dispositif 20" décrit ci-dessous sur sa prise péri-informatique ; son clavier et son écran ne sont pas utilisés pour mettre en oeuvre l'invention et il fonctionne en "micro-serveur" pour échanger des données via son modem (ce dernier ayant été retourné) avec le second terminal (terminal utilisateur), qui est utilisé pour son clavier et son écran. Ainsi, les informations saisies au clavier du second terminal sont envoyées au premier terminal pour interprétation par le dispositif, et les pages résultantes sont envoyées au second terminal pour affichage sur l'écran de ce dernier.

De façon caractéristique de l'invention, on connecte à la prise péri-informatique 14 un ensemble d'éléments 20, que l'on appellera "dispositif", comprenant, essentiellement, un microcontrôleur 21, une mémoire vive RAM 22, une première mémoire 23, également désignée "mémoire d'interprétation" (MI) et une seconde mémoire 24, également désignée "mémoire de données" (MD). Le microcontrôleur 21 assure la gestion des entrées/sorties avec le terminal 10 et l'exécution d'un certain nombre de tâches entre les mémoires 22, 23 et 24 et entre ces mémoires et les données échangées avec le terminal 10.

Le dispositif connecté 20 est, avantageusement, un dispositif autonome non alimenté recevant ses tensions de fonctionnement de l'alimentation 16 du terminal par l'intermédiaire de la prise péri-informatique.

Il peut éventuellement être inclus dans le même boîtier que le terminal 10, ou encore intégré à un périphérique du terminal, par exemple à une imprimante pour rendre celle-ci "intelligente", avec possibilité d'opérer en mode hors-ligne un déplacement dans une arborescence de pages mémorisées lors de la phase de connexion à un serveur distant et imprimer sélectivement certaines des pages réaffichées, l'une des touches du terminal, par exemple la touche "retour chariot" étant affectée à la commande d'impression.

Les mémoires 23 et 24 sont de préférence des mémoires rémanentes, la mémoire d'interprétation 23, destinée à contenir un programme exécutable, pouvant être de type "PROM" ou "flash EPROM" de capacité inférieure ou égale à 64 Ko ; la mémoire de données MD, destinée à recevoir des données fréquemment modifiées (données interprétables et données saisies) peut être une mémoire de type "flash EPROM" de 32, 64, 128 ou 256 Ko, selon les besoins. n n'est cependant pas nécessaire que les mémoires 23 et 24 soient physiquement distinctes ; il peut s'agir de deux zones d'une même mémoire de plus grande capacité.

La mémoire 22, qui n'est destinée qu'à permettre l'exécution des programmes par le microcontrôleur avec une sauvegarde provisoire des informations, peut être simplement volatile, de type RAM.

D'autres configurations peuvent cependant être envisagées, par exemple en utilisant pour les trois mémoires 22, 23 et 24 un seul et même composant, par exemple une RAM sauvegardée, lorsque les programmes à interpréter sont de petite taille et que l'on souhaite une réalisation la plus économique possible.

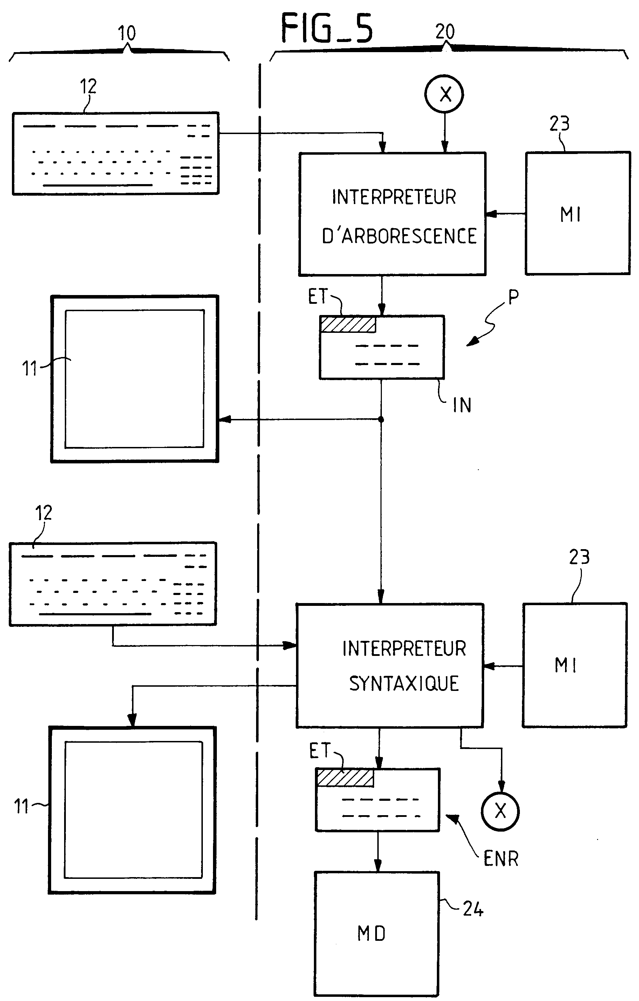

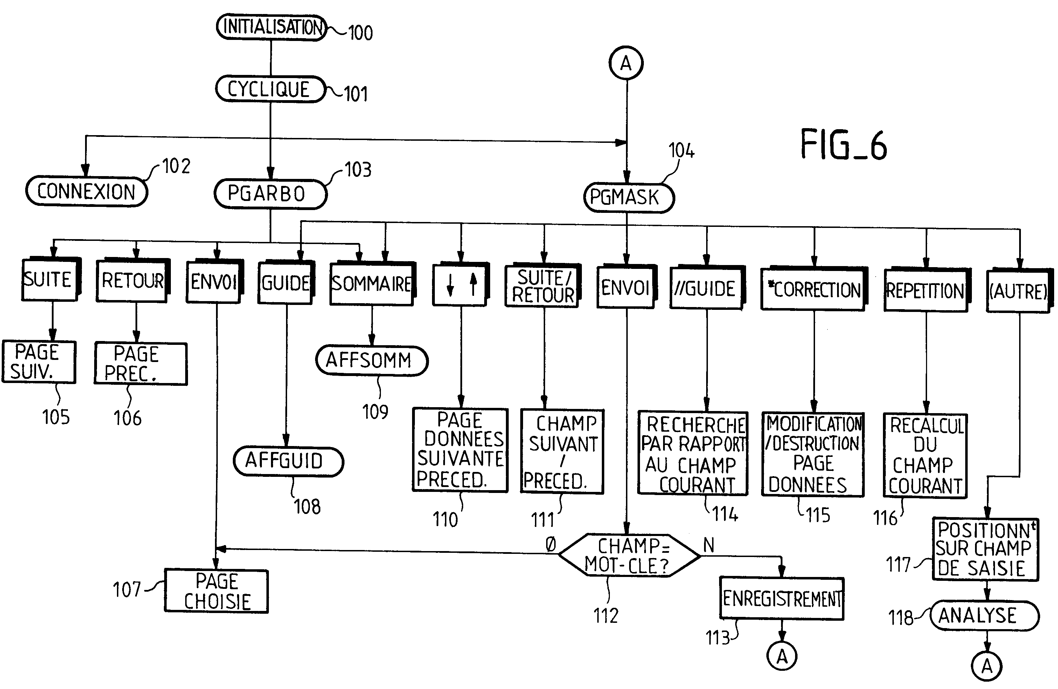

Le microcontrôleur 21 va coopérer avec l'organe d'aiguillage 15 de manière à modifier le fonctionnement normal du terminal 10. Ce microcontrôleur va exécuter le programme contenu dans la mémoire d'interprétation 23, et qui sera décrit plus en détail en référence aux figures 5 et 6. L'exécution de ce programme va alors interférer avec le logiciel de protocole du terminal vidéotex 10, de manière à interpréter les ordres ou les données reçus de celui-ci et lui envoyer des pages à afficher sur l'écran 11.

La configuration de la figure 1, si elle est typique de l'invention, n'est cependant aucunement limitative.

En particulier, la figure 2 présente une autre forme de configuration permettant de mettre en oeuvre les enseignements de l'invention : dans cette configuration, l'"appareil vidéotex" 10 est constitué ici d'un téléviseur ou moniteur vidéo 11, d'un clavier de commande 12 (qui peut être une télécommande de téléviseur), d'un modem 13 assurant l'échange de données avec le serveur 30 via la liaison téléphonique 31, d'un décodeur de télétexte 13' jouant le rôle de second organe de réception de données, par le canal de la liaison hertzienne 31'. Le décodeur 13' est par exemple un décodeur réalisé selon les normes "ANTIOPE" ou "CEEFAX" ou même un décodeur RDS de radio-messagerie. Un boîtier d'aiguillage 15 reliant ces divers éléments coordonne leur fonctionnement. Un dispositif 20, semblable à celui de la figure 1, est également connecté ou incorporé à l'organe 15.

Avec cette configuration, il est possible de charger dans le dispositif connecté 20 des pages vidéotex transmises en permanence, et éventuellement mises à jour régulièrement, par voie hertzienne, donc sans qu'il soit nécessaire de réaliser à proprement parler une connexion avec un serveur; le modem téléphonique 13 ne sert ainsi, par exemple, qu'au télérelevé quotidien des données saisies par l'utilisateur via le clavier 12. Dans une variante simplifiée, ce modem peut être remplacé par un simple codec DTMF (fréquences vocales téléphoniques) couplé acoustiquement à la ligne téléphonique.

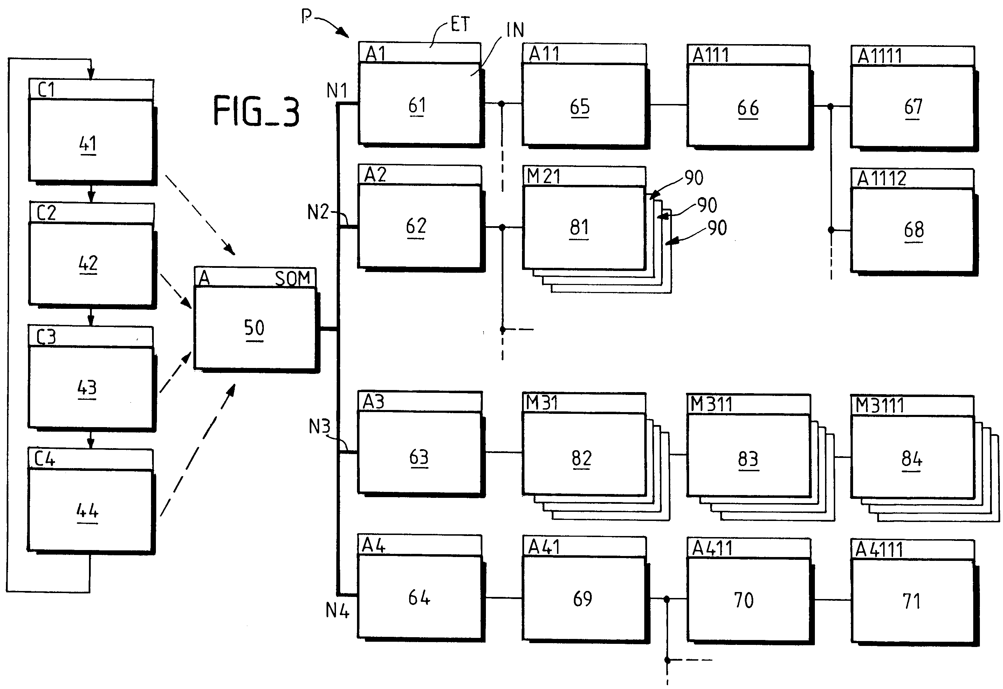

On va maintenant décrire, en référence aux figures 3 à 6, la manière dont est mis en oeuvre le procédé de l'invention, au sein des ensembles tels que ceux des figures 1 et 2 ou d'autres ensembles équivalents.

### Organisation des données

La figure 3 représente un exemple type d'arborescence de pages affichables sur l'écran du terminal.

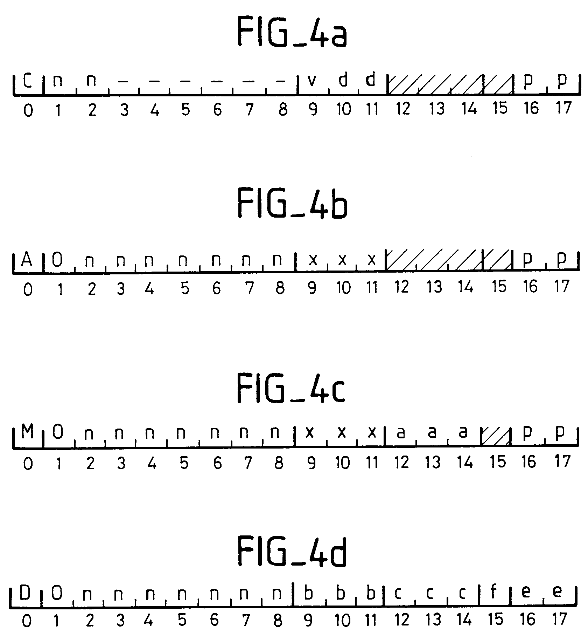

Ces pages P comportent chacune, de façon caractéristique de l'invention, un bloc d'en-tête ET, dont on décrira plus loin le contenu précis en référence à la figure 4. Pour le reste, ces pages contiennent des informations affichables IN conformes par exemple à la norme vidéotex *T 101* du CCITT et dont on ne décrira pas en détail le format, celui-ci n'étant pas spécifique de l'invention.

L'arborescence de la figure 3 est organisée de façon assez semblable à celles que l'on peut trouver sur les services télématiques (mais, dans le cadre de l'invention, les déplacements à l'intérieur de l'arborescence sont gérés exclusivement en local, et non par un ordinateur distant).

Par ailleurs, on supposera que l'ensemble des pages de l'arborescence a été au préalable chargé dans la mémoire d'interprétation 23 par tout moyen approprié, qu'il s'agisse d'une programmation pure et simple de la mémoire ou d'un téléchargement de celle-ci depuis le serveur distant 30 via le terminal 10.

Pour préparer ces pages, on peut notamment disposer d'un système de personnalisation tel qu'un microordinateur spécialement configuré pour générer ces pages, les hiérarchiser et leur attribuer des en-têtes particuliers représentatifs de leur place dans l'arborescence (voir ci-dessous) ; ce système de personnalisation pourra ensuite charger les pages ainsi générées dans la mémoire d'interprétation 23 du dispositif connectable 20 sous forme d'un train de pages, de manière à rendre ensuite celles-ci résidentes dans cette mémoire rémanente.

Dans l'exemple de la figure 3, l'arborescence comporte une pluralité de pages dites "cycliques" 41 à 44 défilant de façon séquentielle lorsque le terminal est inactif. L'appui, par exemple, sur une touche quelconque du clavier provoquera le passage à une page de "sommaire" 50 présentant une série de choix à l'utilisateur. En fonction de ces choix, l'utilisateur pourra accéder à divers niveaux d'arborescence N1 à N4 lui donnant accès à des pages dites "d'arborescence" 61 à 64 qui, en fonction des choix opérés, pourront elles-mêmes donner accès à d'autres pages d'arborescence telles que 65, 66, ... 70, 71.

Ici et dans la suite, on appellera "page d'arborescence" ou "page d'arborescence pure" une page qui n'appelle de l'utilisateur qu'un ordre de recherche de page, permettant l'affichage d'une autre page de l'arborescence, que cet ordre corresponde à un accès guidé (touches "SUITE", "RETOUR", etc.) ou bien un accès direct (par l'introduction d'un mot-clé de page produisant un saut direct à une page définie, quel que soit le cheminement antérieurement suivi dans l'arborescence).

Cette arborescence comporte d'autres types de pages, que l'on appellera "pages de saisie", par exemple les pages référencées 81 à 84, qui appellent de l'utilisateur l'introduction de données à enregistrer (par exemple introduction d'un nom, d'une adresse, d'un montant, etc.) en plus, bien entendu, des ordres de recherche de page qui permettront soit de changer de page sans effectuer de saisie, soit de valider la saisie et de passer à une autre page ou de réitérer une saisie sur la même page.

Ces pages de saisie vont présenter à l'utilisateur un "masque", que l'on décrira plus en détail par la suite, contenant une ou plusieurs zones ou champs de saisie à remplir.

L'ensemble des informations saisies d'une même page correspondra alors à une "fiche" d'un fichier de données à créer ou, éventuellement, modifier. Lorsque l'utilisateur aura rempli les différentes zones de la page, et après que ces zones aient été vérifiées et validées, le microcontrôleur créera un enregistrement qu'il chargera dans la mémoire de données 24. Ces enregistrements peuvent avoir un format semblable à celui d'une page vidéotex, ce qui permettra, lors d'une consultation, de les afficher aisément à l'écran sans qu'il soit nécessaire de procéder à un traitement intermédiaire complexe. Ces différents enregistrements, que l'on appellera par la suite "pages de données", ont été symbolisées derrière la page de saisie qui a permis leur génération, par exemple en 90 derrière la page 81, sur la figure 3.

Comme on peut le voir sur l'exemple, pages d'arborescence pure et pages de saisie peuvent être mêlées de toute manière appropriée dans l'arborescence, les seules contraintes étant celles que le programmeur s'impose en fonction de la meilleure logique d'enchaînement des pages qu'il souhaite retenir.

En fonction des besoins, d'autres types de pages spécifiques peuvent être prévus, par exemple des pages d'exécution de procédures de télécommunications (par exemple pages de numérotation sur un serveur ou pages de connexion automatique à un serveur) ou de gestion courante du terminal (par exemple sélection du nombre de colonnes affichées, etc.). Ces pages ne faisant pas partie à proprement parler de l'invention, elles ne seront pas décrites plus en détail.

Inversement, on peut, dans une version simplifiée non destinée à la saisie, omettre les pages de saisie et de données, l'invention étant alors appliquée à la seule consultation de pages d'arborescence, sans saisie de données ; les seules pages considérées sont alors des pages cyclique ou d'arborescence pure, ou même d'arborescence pure seulement.

Les figures 4a à 4d explicitent le contenu de l'en-tête ET pour les différents types de pages, en-tête qui permet de reconnaître le type d'une et de caractériser celle-ci.

Le premier caractère (caractère n° 0) de l'en-tête indique le type de page : "C" pour une page de type cyclique, "A" pour une page d'arborescence pure, "M" (masque) pour une page de saisie, et "D" pour une page de données.

Les autres caractères de l'en-tête (caractères n° 1 à 17) sont spécifiques à chaque type de page.

Dans le cas d'une page cyclique (figure 4a), le caractère n° 1 indique le numéro *nn* de la page (compris entre 1 et 99), le caractère n° 9 indique la vitesse d'affichage *v* de la page (adaptée au terminal vidéotex utilisé), les caractères 10 et 11 donnent la durée d'affichage *dd* de la page (en secondes) et les caractères 16 et 17 donnent la taille *pp* de la page vidéotex.

Dans le cas d'une page d'arborescence pure (figure 4b), le caractère n° 1 est systématiquement un zéro et, de façon caractéristique de l'invention, les caractères n° 2 à 8 sont formés par concaténation des touches de choix d'aiguillage dans l'arborescence que l'utilisateur aurait dû frapper pour arriver à cette page depuis la page de sommaire général (à laquelle on affecte la valeur *nnnnnnn* = 0)*.* Ainsi, si l'on prend l'exemple de la page 68 de la figure 3, celle-ci se voit attribuer la valeur *nnnnnnn =* 1112, le premier chiffre indiquant que l'on se trouve sur le niveau supérieur N1. Inversement, pour la page référencée 71 sur la figure 3, la valeur *nnnnnnn* = 4111 indique que, après la page de sommaire, on s'est placé sur le niveau N4 mais qu'ensuite on a toujours (trois fois de suite) suivi le premier choix proposé. Lorsqu'il s'agit de deux pages simplement chaînées sans ramification de l'arborescence (par exemple les pages 65 et 66, ou 64 et 69), on assimile l'appui sur une touche "SUITE" ou équivalente à un choix de rang 1. On verra plus loin que cette manière hiérarchique de repérer les pages simplifie grandement le déplacement dans l'arborescence, la recherche de la page précédente étant simplement obtenue par troncature du dernier chiffre significatif (la page précédant la page 1112 est la page 111, elle-même précédée par la page 11, etc.). La zone suivante (caractères n° 9 à 11) peut, de façon optionnelle, recevoir trois caractères alphanumériques *xxx* représentatifs d'un mot-clé associé à la page, permettant d'accéder directement à celle-ci depuis n'importe quelle autre page sans qu'il soit besoin de cheminer le long de l'arborescence. La page de sommaire (référencée 50 sur la figure 3) possède obligatoirement le mot-clé *xxx* = SOM, le mot-clé étant facultatif pour toutes les autres pages, à l'exception de pages prédéfinies ou utiles au système, comme par exemple les pages de guide ou d'initialisation.. Comme dans le cas des pages cycliques, les caractères n° 16 et 17 indiquent la taille *pp* de la page vidéotex affichable.

Les pages de saisie (figure 4c) possèdent une adresse représentative de leur position dans l'arborescence, identique à celle des pages de type A (les deux types de pages sont d'ailleurs mêlés dans l'arborescence et doivent être repérés de la même manière), à savoir: concaténation *nnnnnnn* du chemin d'accès dans l'arborescence, sur les caractères n° 2 à 8, et mot-clé associé éventuel *xxx*, sur les caractères n° 9 à 11. Les caractères n° 12 à 14, quant à eux, donnent l'adresse *aaa* de la première page de données (page de type D) générée par le masque de saisie de cette page de type M ; si aucune donnée n'a été saisie, la zone correspondante est mise à une valeur prédéterminée, par exemple la valeur hexadécimale 'FFFFFF'. Les deux derniers caractères (n° 16 et 17) indiquent, ici encore, la taille *pp* de la page vidéotex affichable.

Les pages de données (figure 4d) comportent, sur les caractères n° 2 à 8, l'adresse *nnnnnnn* de la page de masque qui a servi à la créer, cette adresse étant bien entendu codée sous la même forme que dans les enregistrements de type M. Les caractères n° 9 à 11 donnent l'adresse *bbb* de la page de données précédente, et les caractères n° 12 à 14 celle *ccc* de la page de données suivante (ou 'FFFFFF' s'il n'y en a pas), afin de permettre un chaînage des différents enregistrements générés par un même masque de saisie. Le caractère n° 15 est un drapeau de validation *f,* utile par exemple s'il l'on veut annuler certains enregistrements sans avoir à les supprimer physiquement de la mémoire (et donc sans refaire le chaînage). Les caractères n° 16 et 17, enfin, donnent la taille *ee* de l'enregistrement constitué par cette page de données.

### Déroulement du procédé de l'invention

On va maintenant décrire, en référence au schéma des figure 5 et 6, le déroulement général du traitement des données selon l'invention.

Sur la figure 5, on a représenté à gauche de la ligne en trait mixte les éléments de l'appareil vidéotex correspondant à une action donnée (introduction de commandes ou de données par le clavier 12, ou affichage sur l'écran 11) et, à droite de cette ligne, des blocs de traitement correspondant à des étapes de processus mises en oeuvre à l'intérieur du dispositif connecté 20.

Tout d'abord, par l'intermédiaire des touches de fonction du clavier 12, l'utilisateur demande la recherche d'une page particulière (on verra, en référence à la figure 6, les différentes manières dont ces ordres peuvent être transmis).

L'ordre fait alors l'objet d'une première interprétation, par un programme que l'on peut appeler "interpréteur d'arborescence" ou "moteur de déplacement", qui va rechercher dans la mémoire 23 la page demandée P, celle-ci étant identifiée par son en-tête ET si et seulement si celui-ci répond aux critères de recherches élaborés par l'interpréteur d'arborescence en fonction de l'ordre reçu. En particulier, il n'est nécessaire ni d'analyser les informations IN proprement dites de la page, ni de modifier ou reconstituer la page à partir d'informations éparses ou incomplètes, celle-ci étant stockée telle quelle dans la mémoire 23.

Cette page P est alors envoyée à l'appareil vidéotex et affichée sur l'écran 11 de celui-ci.

Si cette page est une page d'arborescence pure, on attend un autre ordre de l'utilisateur, qui sera traité de la même façon par l'interpréteur d'arborescence pour affichage d'une nouvelle page, et ainsi de suite.

En revanche, si la page affichée est une page de saisie, on attend de l'utilisateur l'introduction de paramètres, qui seront traités à un second niveau par un autre programme d'interprétation, que l'on peut appeler "interpréteur syntaxique". En fonction de critères prédéterminés, codés dans la mémoire 23, celui-ci va analyser les données frappées sur les touches alphanumériques du clavier 12, les refuser si elles ne sont pas conformes (chaîne de caractères plus longue que le champ de saisie, format de date non conforme, etc.) et les valider dans le cas contraire. Lorsque tous les champs de saisie du masque auront été remplis (le masque pouvant d'ailleurs ne contenir qu'un seul champ de saisie), l'interpréteur va générer un enregistrement ENR, possédant un en-tête ET au format de la figure 4d ("page de données"), et stocker cet enregistrement dans la mémoire permanente 24 (mémoire de données) pour utilisation ou téléchargement ultérieurs.

L'interpréteur syntaxique va alors soit se mettre en attente d'une nouvelle commande (branchement X en direction de l'interpréteur d'arborescence) soit boucler sur lui-même au cas où l'on souhaite générer plusieurs enregistrements successifs de même format.

De façon caractéristique de l'invention, les critères à vérifier par l'interpréteur syntaxique, qui consistent à vérifier la conformité intrinsèque d'une d'information à saisir dans un champ donné, sont indiqués par une série de caractères prédéterminés affichés sur le masque de saisie à l'endroit du champ, ces caractères étant représentatifs du type d'informations à saisir.

Par exemple, à une séquence de *n* points devra correspondre la saisie de *n* caractères alphanumériques (au plus) : en d'autres terme, si l'interpréteur syntaxique lit dans la page, au moment de l'affichage et avant toute introduction de caractères, une séquence de *n* points, il déduira immédiatement qu'il s'agit là d'un champ de saisie de *n* caractères alphanumériques devant être tapés par l'utilisateur, qu'il y a lieu de positionner le curseur sur le premier point et d'attendre la saisie de l'utilisateur. Si plus de *n* caractères sont frappés, un bip sonore avertira l'utilisateur et le curseur sera empêché de se déplacer vers la droite à chaque nouveau caractère frappé. À ce stade, la frappe de la touche "CORRECTION" du clavier effacera la dernière lettre frappée, tandis que la touche "ANNULATION" effacera l'intégralité de la ligne et positionnera de nouveau le curseur en première position.

S'il existe un autre champ dans la page, la frappe de la touche "SUITE" positionnera automatiquement le curseur sur ce nouveau champ, celle de la touche "RETOUR" replacera le curseur derrière le dernier caractère frappé du champ précédent, et ainsi de suite.

La touche "ENVOI" permettra le transfert des informations introduites par l'utilisateur de la mémoire RAM, où elles étaient provisoirement stockées, vers la mémoire de données permanente 24.

Le tableau ci-dessous donne un certain nombre d'exemples de champs qu'il est possible de coder de cette manière d'après la syntaxe des caractères.

| n° | Caractères affichés | Type de champ attendu |
|---|---|---|
| 1 | .......... | Alphanumérique |
| 2 | ------- | Numérique |
| 3 | ----,-- | Numérique avec décimales |
| 4 | 18,6_ | Numérique, avec prévaleur |
| 5 | ?. | Booléen (O/N) |
| 6 | ../../.. | Date |
| 7 | <...> | Saut de page direct |
| 8 | .......... | Alphanumérique & obligatoire |
| 9 | ../../.. | Date & obligatoire |
| ... | ... | ... |

Dans les cas n° 8 et 9, le soulignement indique que la saisie du champ est obligatoire, c'est-à-dire que l'on ne pourra pas appuyer sur la touche "ENVOI" tant que le ou les champs déclarés comme obligatoires n'auront pas été remplis.

La syntaxe ci-dessus n'est bien entendu qu'illustrative, et de nombreuses variantes peuvent être envisagées. On peut prévoir toute une gamme de champs spécifiques propres à imposer un format de saisie particulier à l'utilisateur et à lui interdire certaines touches.

Outre l'interprétation syntaxique proprement dite, on peut prévoir que certains champs seront calculés automatiquement en fonction des paramètres introduits dans d'autres champs : ainsi, le calcul d'un montant TTC en fonction d'un montant unitaire HT, d'un nombre d'articles et d'une prévaleur de TVA: lorsque tous les paramètres auront été introduits, l'interpréteur calculera automatiquement la valeur en question, l'affichera et l'inscrira dans le champ correspondant de l'enregistrement avant stockage dans la mémoire de données.

Ces calculs peuvent être aisément réalisés en déclarant, lors de la création du masque de saisie, que certains champs sont des "variables", ce qui peut être fait aisément en leur donnant une syntaxe particulière, par exemple en les faisant précéder du caractère "$" ou toute autre syntaxe appropriée.

Cette notion de variable permet non seulement de réaliser des calculs entre plusieurs données d'une même page, mais également de manipuler des chaînes de caractères, ou de partager des données alphanumériques entre plusieurs pages, etc.

Les calculs sont effectués très simplement en déclarant une formule dans le champ considéré, précédée par exemple du signe "=", à la manière de ce que l'on trouve par exemple dans les logiciels tableurs.

On notera, en conclusion de la description qui précède, que l'ensemble des critères permettant les deux interprétations (d'arborescence et syntaxique) sont intrinsèques au contenu des pages, à savoir à l'en-tête de page dans le premier cas et au format des champs de saisie dans le second cas. En d'autres termes, il n'est nécessaire de charger aucune information complémentaire pour réaliser les actions voulues, qu'il est possible de déduire par simple interprétation du contenu des pages.

On va maintenant décrire, en référence à la figure 6, les différentes commandes offertes à l'utilisateur et la manière dont s'enchaînent les divers modules de traitement exécutés par le microcontrôleur du dispositif 20.

On suppose que la mémoire d'interprétation 23 du dispositif 20 a déjà été chargée, c'est-à-dire que celui-ci contient l'ensemble des pages de l'arborescence et donc, par voie de conséquence, n'attend plus que des ordres ou des données de l'utilisateur.

Lorsque le dispositif 20 est enfiché sur la prise péri-informatique du terminal vidéotex, c'est-à-dire lors de son raccordement physique au terminal, lors d'une étape d'initialisation (bloc 100 sur la figure 6) le microcontrôleur initialise les zones de la RAM et ajuste la vitesse optimale de communication avec le terminal, vitesse qui correspond à la rapidité d'affichage sur le terminal des pages en provenance de la mémoire d'interprétation 23 ou de la mémoire de données 24.

Le dispositif étant ainsi configuré, on passe ensuite (bloc 101) à l'affichage des pages cycliques, qui vont défiler de manière continuelle et répétitive sur l'écran du terminal, sans aucune intervention de l'utilisateur.

La frappe d'une touche quelconque du clavier provoque alors l'affichage automatique de la page de sommaire, qui est une page arborescente qui va permettre d'accéder à d'autres pages.

Ces autres pages peuvent être de divers types : page de connexion automatique à un serveur, auquel cas on exécute les actions correspondantes (bloc 102), page d'arborescence pure (bloc 103) ou page de saisie (bloc 104).

Dans le cas d'une page d'arborescence pure (bloc 103), on met en oeuvre le premier niveau d'interprétation, c'est-à-dire l'interpréteur d'arborescence.

Pour passer d'une page à l'autre, l'utilisateur peut utiliser les touches de fonction habituelles, qui provoqueront les mêmes actions que celles exécutées habituellement au cours des sessions de connexion avec un serveur télématique :
- Touche "SUITE", qui provoque l'affichage de la page suivante, dans le cas de deux pages immédiatement chaînées sans ramification de l'arborescence (bloc 105),
- Touche "RETOUR", qui provoque, inversement, l'affichage de la page immédiatement précédente (bloc 106),
- Touche "ENVOI", précédée d'un chiffre ou d'un mot-clé, pour passer à l'une des pages suivantes de l'arborescence par choix de la ramification, ou l'accès direct à une page quelconque par le mot-clé (bloc 107),
- Touche "GUIDE", qui provoque l'affichage d'une page spécifique, isolée, d'aide à l'utilisateur (bloc 108),
- Touche "SOMMAIRE", qui provoque le retour à la page de sommaire, c'est-à-dire à la racine de l'arborescence (bloc 109).

Dans le cas d'une page de saisie (bloc 104), l'utilisateur dispose des possibilités suivantes :
- Touches "GUIDE" ou "SOMMAIRE" : mêmes fonctions que précédemment (blocs 108 et 109),
- Touches " ↑ " ou " ↓ " : touches permettant, une fois les données enregistrées dans la mémoire permanente, de faire défiler le contenu des divers enregistrements, à la manière d'un agenda que l'on feuillette ; il s'agit, en d'autres termes, de touches de consultation des données déjà enregistrées, pour un format de masque de saisie déterminé (bloc 110).
- Touches "SUITE" et "RETOUR" : elles permettent, sur une même page de saisie, de passer d'un champ de saisie au suivant ou au précédent (bloc 111).
- Touche "ENVOI" : l'appui sur cette touche va provoquer, après analyse d'un champ de mot-clé (bloc 112), soit le saut direct à une page déterminée (bloc 107) si ce champ n'est pas vide, soit l'enregistrement des données saisies pour la page en question dans la mémoire de données (bloc 113) dans le cas contraire. Dans ce dernier cas, on vient alors boucler sur le bloc 104, qui provoque l'analyse d'une nouvelle page de saisie et l'analyse des commandes reçues.
- Touches "#" + "GUIDE" : cette combinaison de touches permet, pour un champ donné, d'effectuer une recherche dans l'ensemble des enregistrements contenus dans la mémoire de données, par exemple les enregistrements commençant par une lettre ou une série de lettres données, etc (bloc 114).
- Touches "*" + "CORRECTION" : cette combinaison de touches permet de modifier ou de détruire un enregistrement déjà présent dans la mémoire de données, et préalablement réaffiché ; dans le cas d'une modification, on substitue l'enregistrement modifié au précédent tandis que, dans le cas d'une destruction, on dépositionne un drapeau de validation (caractère *f*, figure 4d), ce qui permet de considérer l'enregistrement comme inexistant sans avoir à reconfigurer la mémoire (bloc 115).
- Touche "RÉPÉTITION", qui sert, dans le cas où un champ est constitué d'une donnée calculée à partir de valeurs introduites dans d'autres champs, à recalculer cette valeur, par exemple après modification de la valeur d'un des champs (bloc 116).

Les autres touches (alphanumériques) vont correspondre non plus à une action exercée sur une page préexistante, mais à l'introduction de nouvelles données. C'est à ce stade que sera mis en oeuvre le second niveau d'interprétation, à savoir l'interpréteur syntaxique, qui va assurer, comme décrit plus haut, le positionnement sur chacun des champs de saisie (bloc 117) et le traitement (contrôle de conformité et, éventuellement, calculs) des données introduites par l'utilisateur (bloc 118). Une fois le champ complété, on se replace au point A (bloc 104) dans l'attente d'une action de l'utilisateur : touche "SUITE" pour passage au champ suivant, touche "ENVOI" pour déclencher l'enregistrement des données introduites, etc.

## Revendications

1. Un procédé de traitement de signaux vidéotex échangés avec un appareil vidéotex (10), cet appareil vidéotex comprenant un organe d'introduction de commandes et de données (12), un organe d'affichage de pages vidéotex (11), éventuellement un organe de réception de données en provenance d'un site distant et/ou d'émission de données vers un site distant (13 ; 13'), ainsi qu'un organe d'aiguillage (15) gérant le fonctionnement coordonné des organes précités, ce procédé comportant des étapes consistant à :
- charger préalablement dans une première mémoire une pluralité de pages affichables prédéfinies dont au moins certaines sont hiérarchisées entre elles selon une arborescence prédéterminée, chacune de ces pages comportant, d'une part, un bloc d'identification (ET) contenant une donnée représentative de la place de la page respective dans l'arborescence et, d'autre part, l'ensemble des informations (IN) à reproduire sur l'organe d'affichage, et
- opérer ensuite une recherche de page(s) dans ladite arborescence pour affichage sur l'organe d'affichage,
**procédé caractérisé en ce que** :
- ladite recherche est opérée au sein d'un dispositif (20) couplé à l'appareil vidéotex par l'intermédiaire d'un organe d'échange de données en local de ce dernier,
- ladite première mémoire est une mémoire (23 ; MI) située dans ce dispositif,
- il est prévu au moins deux types de pages (P), à savoir des pages d'arborescence pure, qui n'appellent de l'utilisateur que des ordres de recherche de page, et des pages de saisie, qui appellent en outre de l'utilisateur l'introduction de données à mémoriser, ces pages de saisie comportant alors des champs de saisie de données contenant une série de caractères prédéterminés représentatifs du type d'information à saisir dans le champ respectif, et
- ladite recherche comporte les étapes consistant à :
a) recevoir de l'organe d'échange de données en local un ordre de recherche de page, consécutif à une action exercée par un utilisateur sur l'organe d'introduction de commandes et de données,
b) opérer une première interprétation (INTERPRÉTATION D'ARBORESCENCE) de cet ordre, en recherchant dans la première mémoire une page dont le bloc d'identification (ET) répond à un critère prédéterminé fonction dudit ordre et du bloc d'identification de la page courante affichée,
c) émettre la page ainsi trouvée vers l'organe d'échange de données en local, pour affichage sur l'organe d'affichage, et
d) lorsque la page courante affichée est une page de saisie :
d₁) recevoir de l'organe d'échange de données en local les données à saisir, provenant d'une action exercée par l'utilisateur sur l'organe d'introduction de commandes et de données,
d₂) opérer une seconde interprétation (INTERPRÉTATION SYNTAXIQUE), en vérifiant pour chaque champ de saisie la conformité des données ainsi reçues au type correspondant d'information à saisir et, dans l'affirmative, créer un enregistrement (ENR) contenant ces données, et
d₃) charger cet enregistrement dans une seconde mémoire (24 ; MD) du dispositif.

2. Le procédé de la revendication 1, dans lequel ladite donnée représentative de la place respective de la page dans l'arborescence est formée soit de la concaténation des étapes du chemin d'accès (*nnnnnnn*) à la page depuis une page de sommaire soit d'un mot-clé (*xxx*) d'accès direct, associé de façon univoque à cette page.

3. Le procédé de la revendication 1, dans lequel le bloc d'identification contient en outre une donnée (C, A, M, D) représentative du type de la page.

4. Le procédé de la revendication 1, dans lequel le format dudit enregistrement (ENR) est celui d'une page, cette page étant réaffichable par exécution d'une première étape précitée d'interprétation, et éventuellement modifiable par exécution d'une seconde étape précitée d'interprétation.

5. Le procédé de la revendication 1, dans lequel on prévoit en outre, après chargement de la seconde mémoire par un ou plusieurs enregistrements, une étape de télérelevé de ces enregistrements depuis ledit site distant (30) par interrogation du dispositif via ledit organe d'échange de données en local (14) et ledit organe de réception de données en provenance d'un site distant et/ou d'émission de données vers un site distant (13).

6. Un appareil vidéotex (10), comprenant un organe d'introduction de commandes et de données, un organe d'affichage de pages vidéotex (11), un organe d'échange de données en local, éventuellement un organe de réception de données en provenance d'un site distant et/ou d'émission de données vers un site distant, ainsi qu'un organe d'aiguillage gérant le fonctionnement coordonné des organes précités, cet appareil vidéotex comprenant :
- des moyens pour charger préalablement dans une première mémoire une pluralité de pages affichables prédéfinies dont au moins certaines sont hiérarchisées entre elles selon une arborescence prédéterminée, chacune de ces pages comportant, d'une part, un bloc d'identification (ET) contenant une donnée représentative de la place de la page respective dans l'arborescence et, d'autre part, l'ensemble des informations (IN) à reproduire sur l'organe d'affichage, et
- des moyens pour opérer ensuite une recherche de page(s) dans ladite arborescence pour affichage sur l'organe d'affichage,
**appareil vidéotex caractérisé en ce que** :
- lesdits moyens pour opérer la recherche de page(s) sont situés dans un dispositif (20) couplé à un organe d'échange de données en local de l'appareil vidéotex,
- ladite première mémoire est une mémoire (23 ; MI) située dans ce dispositif,
- il est prévu au moins deux types de pages (P), à savoir des pages d'arborescence pure, qui n'appellent de l'utilisateur que des ordres de recherche de page, et des pages de saisie, qui appellent en outre de l'utilisateur l'introduction de données à mémoriser, ces pages de saisie comportant alors des champs de saisie de données contenant une série de caractères prédéterminés représentatifs du type d'information à saisir dans le champ respectif, et
- lesdits moyens pour opérer la recherche de page(s) comportent :
a) des moyens pour recevoir de l'organe d'échange de données en local un ordre de recherche de page, consécutif à une action exercée par un utilisateur sur l'organe d'introduction de commandes et de données,
b) des moyens pour opérer une première interprétation (INTERPRÉTATION D'ARBORESCENCE) de cet ordre, en recherchant dans la première mémoire une page dont le bloc d'identification (ET) répond à un critère prédéterminé fonction dudit ordre et du bloc d'identification de la page courante affichée,
c) des moyens pour émettre la page ainsi trouvée vers l'organe d'échange de données en local, pour affichage sur l'organe d'affichage, et
d) lorsque la page courante affichée est une page de saisie
d₁) recevoir de l'organe d'échange de données en local les données à saisir, provenant d'une action exercée par l'utilisateur sur l'organe d'introduction de comandes et de données,
d₂) opérer une seconde interprétation (INTERPRÉTATION SYNTAXIQUE), en vérifiant pour chaque champ de saisie la conformité des données ainsi reçues au type correspondant d'information à saisir et, dans l'affirmative, créer un enregistrement (ENR) contenant ces données, et
d₃) charger cet enregistrement dans une seconde mémoire (24 ; MD) du dispositif.

7. Un dispositif connectable (20), pouvant être couplé à un appareil vidéotex par l'intermédiaire d'un organe d'échange de données en local (14) de ce dernier, caractérisé en ce qu'il comprend :
- une première (23 ; MI) et une seconde (24 ; MD) mémoire,
- des moyens pour charger préalablement dans la première mémoire (23 ; MI) une pluralité de pages affichables prédéfinies dont au moins certaines sont hiérarchisées entre elles selon une arborescence prédéterminée, chacune de ces pages comportant, d'une part, un bloc d'identification (ET) contenant une donnée représentative de la place de la page respective dans l'arborescence et, d'autre part, l'ensemble des informations (IN) à reproduire sur l'organe d'affichage, au moins deux types de pages (P) étant prévues, à savoir des pages d'arborescence pure, qui n'appellent de l'utilisateur que des ordres de recherche de page, et des pages de saisie, qui appellent en outre de l'utilisateur l'introduction de données à mémoriser, ces pages de saisie comportant alors des champs de saisie de données contenant une série de caractères prédéterminés représentatifs du type d'information à saisir dans le champ respectif, et
- des moyens pour opérer ensuite une recherche de page(s) dans ladite arborescence pour affichage sur l'organe d'affichage, ces moyens comportant :
a) des moyens pour recevoir de l'organe d'échange de données en local un ordre de recherche de page, consécutif à une action exercée par un utilisateur sur l'organe d'introduction de commandes et de données,
b) des moyens pour opérer une première interprétation (INTERPRÉTATION D'ARBORESCENCE) de cet ordre, en recherchant dans la première mémoire une page dont le bloc d'identification (ET) répond à un critère prédéterminé fonction dudit ordre et du bloc d'identification de la page courante affichée,
c) des moyens pour émettre la page ainsi trouvée vers l'organe d'échange de données en local, pour affichage sur l'organe d'affichage, et
d) lorsque la page courante affichée est une page de saisie :
d₁) recevoir de l'organe d'échange de données en local les données à saisir, provenant d'une action exercée par l'utilisateur sur l'organe d'introduction de commandes et de données,
d₂) opérer une seconde interprétation (INTERPRÉTATION SYNTAXIQUE), en vérifiant pour chaque champ de saisie la conformité des données ainsi reçues au type correspondant d'information à saisir et, dans l'affirmative, créer un enregistrement (ENR) contenant ces données, et
d₃) charger cet enregistrement dans une seconde mémoire (24 ; MD) du dispositif.

8. Un système de personnalisation d'un dispositif connectable selon la revendication 7, caractérisé en ce qu'il comprend :
- modes moyens pour générer une pluralité de pages affichables prédéfinies (P) dont au moins certaines sont hiérarchisées entre elles selon une arborescence prédéterminée, chacune de ces pages comportant, d'une part, un bloc d'identification (ET) contenant une donnée représentative de la place de la page respective dans l'arborescence et, d'autre part, l'ensemble des informations (IN) à reproduire sur un organe d'affichage d'un appareil vidéotex, et
- des moyens pour charger ensuite ces pages dans ladite première mémoire (23) dudit dispositif connectable (20).

9. Le système de personnalisation de la revendication 8, caractérisé en ce qu'il comprend en outre :
- des moyens pour charger préalablement dans ledit dispositif connectable (20) des données logicielles pour la mise en oeuvre desdites première et seconde interprétation (INTERPRÉTATION D'ARBORESCENCE ; INTERPRÉTATION SYNTAXIQUE).
